(19) Europäisches Patentamt
European Patent Office
Office européen des brevets

(11) EP 0 687 714 B1

(12) EUROPEAN PATENT SPECIFICATION

(45) Date of publication and mention
of the grant of the patent:
**06.05.1999 Bulletin 1999/18**

(51) Int Cl.6: **C09D 5/03**

(21) Application number: **95108012.6**

(22) Date of filing: **24.05.1995**

(54) **Powder coating**

Pulverlack

Revêtement sous forme de poudre

(84) Designated Contracting States:
**DE FR GB**

(30) Priority: **27.05.1994 JP 115589/94**

(43) Date of publication of application:
**20.12.1995 Bulletin 1995/51**

(73) Proprietor: **Nippon Paint Co., Ltd.**
**Kita-ku, Osaka-shi, Osaka 531 (JP)**

(72) Inventors:
• **Tsutsui, Koich**
**Tsuzuki-gun, Kyoto 610-03 (JP)**
• **Ueno, Tasaburo**
**Rocky River, Ohio 44116 (US)**
• **Kenny, John**
**Neyagawa-shi, Osaka 572 (JP)**
• **Libke, Shannon**
**Hirakata-shi, Osaka 573 (JP)**

(74) Representative:
**Brehm, Hans-Peter, Dr., Dipl.-Chem.**
**Patentanwälte**
**Kern, Brehm & Partner**
**Albert-Rosshaupter-Strasse 73**
**81369 München (DE)**

(56) References cited:
**EP-A- 0 536 791          EP-A- 0 652 265**
**EP-A- 0 653 466**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### TECHNICAL FIELD

The present invention relates to a powder coating which is improved in transportability and capable of yielding a film of improved appearance.

### PRIOR ART

A powder coating generally comprises a film-forming resin having a volume average particle diameter of about 30-40 μm and capable of yielding a film on application to a substrate surface by an electrostatic spray coating, fluidized-dipping or other coating technique and subsequent baking.

However, such a powder coating does not form a glossy, smooth film so that it has the disadvantage of poor appearance.

As a technology for overcoming the above-mentioned disadvantage and providing a film of improved appearance, Japanese Patent (JP) Application H-3-264025 discloses a powder coating having an average particle diameter smaller than the usual range and, yet, with the maximum proportion of small particles being limited, namely a powder coating having an average particle diameter of 5-20 μm and a proportion of particles not exceeding 5 μm in diameter accounting for 25 weight % or less.

This powder coating yields a glossy, dense and smooth film but since its average particle diameter is smaller than that of the earlier powder coating, it is poor in transportability so that it tends to plug the pipeline for pneumatic or other transport.

Under the circumstances the object of the present invention is to provide a powder coating which can form a film of good appearance and have excellent transportability.

### SUMMARY OF THE INVENTION

The gist of the present invention resides in providing a powder coating comprising a film-forming resin having a volume average particle diameter of 20-50 μm with a standard deviation of particle diameter distribution not greater than 20 μm; and wherein the particle diameter of the largest particles constituting said powder coating is not larger than 90 μm.

### BRIEF DESCRIPTION OF THE DRAWING

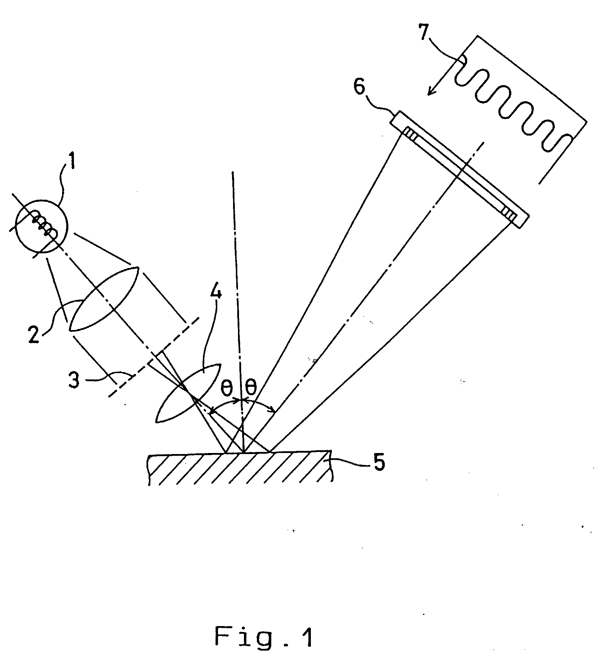

Fig. 1 shows a schematic diagram of the optics of the apparatus used for the evaluation of film appearance.

### DETAILED DESCRIPTION OF THE INVENTION

The volume average particle diameter of the powder coating of the the present invention is 20-50 μm. If the volume average particle diameter is less than 20 μm, the powder tends to plug the pipeline of the pneumatic transport system line to cause a transportation trouble, while exceeding 50 μm fails to provide for a film of good appearance. The preferred range is 20-40 μm. The value of volume average particle diameter can be measured with a particle size analyzer of electromagnetic wave scattering, such as Leeds & Northrop's Microtrac-II.

The standard deviation of particle diameter distribution of the powder coating of the present invention is not greater than 20 μm. If the standard deviation exceeds 20 μm, a film of satisfactory appearance will not be obtained. For better results, the standard deviation of particle diameter distribution is preferably not greater than 16 μm and, preferably, not greater than 13 μm. When the standard deviation is not greater than 16 μm, the film has a satisfactory appearance and when it is not greater than 13 μm, a still more satisfactory film appearance is obtained.

The standard deviation of particle diameter distribution of a powder coating can be calculated from the data obtained with the particle size analyzer by means of the following equation.

$$\sigma = [\Sigma \{ (D - X)^2 F\} / \Sigma F]^{1/2}$$

wherein σ represents the standard deviation of particle diameter distribution. D represents the particle diameter of each individual particle. X represents the volume average particle diameter as expressed by $X = \Sigma (DF) / \Sigma F$, where F represents the frequency of the particle.

The diameter of the largest particle in the powder coating of the present invention is not greater than 90 μm.

If there are particles exceeding 90 µm in diameter, a film of good appearance cannot be obtained. The preferred diameter of the largest particle is not less than 80 µm.

In the preferred powder coating of the present invention, the diameter of the largest of particles constituting the coating is not greater than 90 µm and the diameter of the smallest of particles is not less than 1 µm. The presence of particles smaller than 1 µm results in poor transportability.

The powder coating of the present invention comprises a film-forming resin of binder component. The film forming resin is that commonly used in the field of powder coating , but not limited in its kind. For example, both thermoplastic resin and thermosetting resin can be mentioned.

The type of thermoplastic resin that can be used is not particularly limited. Thus, vinyl resins such as poly (vinyl chloride), polyethylene resin, polyamide resin, etc. can be employed with particular advantage.

The type of thermosetting resin that can be used is not particularly limited, either. Thus, epoxy resin, thermosetting acrylic resin, and thermosetting polyester resin, among others, can be employed among others.

When a thermosetting resin is used as the film-forming resin, the powder coating of the present invention preferably contains a curing agent and a curing accelerator.

The amount of said curing agent is preferably in the range of 5-80 parts by weight based on 100 parts by weight of the thermosetting resin used as the film-forming resin. If the proportion of the curing agent is less than 5 parts by weight, the hardening effect will be insufficient. On the other hand, if it exceeds 80 parts by weight, the hardening will proceed too far, so that the physical properties of the film will be adversely affected.

The amount of said curing accelerator is preferably 0.1-5 parts by weight based on 100 parts by weight of the thermosetting resin used as the film-forming resin. If the proportion of the curing accelerator is less than 0.1 part by weight, the curing of the resin will be sufficient. If it exceeds 5 parts by weight, the hardening will proceed too far so that the physical properties of the film will be adversely affected.

When an epoxy resin is used as the film-forming resin in accordance with the present invention, a curing agent and/or a curing accelerator, e.g. phthalic anhydride, an amine compound, an imidazole compound, dicyandiamide, etc., and/or a different resin such as acrylic resin can be concomitantly used where necessary.

When a thermosetting acrylic resin is used as said film-forming resin in the practice of the present invention, other resins such as epoxy resin, melamine-formaldehyde resin, etc., and curing agents such as polybasic carboxylic acids, blocked isocyanates, etc., can be selectively used where necessary.

When a thermosetting polyester resin is used as said film-forming resin in the practice of the present invention, other resins such as melamine-formaldehyde resin, epoxy resin, etc. and curing agents such as polybasic acids, blocked isocyanates, triglycidyl isocyanurate, etc. can be selectively employed where necessary.

The powder coating of the present invention may contain a pigment and other additives where necessary.

The additives mentioned above may be other resins, curing agents, curing accelerators or curing catalysts, surface modifiers, plasticizers, ultraviolet absorbers, antioxidants, antifoaming agents and pigment dispersants, among others.

The type of pigment that can be used is not particularly limited, thus including titanium dioxide, red iron oxide, yellow iron oxide, carbon black, phthalocyanine blue, phthalocyanine green, quinacridone red, etc., to mention just a few preferred examples.

The preferred amount of said pigment is 1-80 parts by weight based on 100 parts by weight of the powder coating. If the amount of the pigment is less than 1 part by weight, no sufficient coloring effect and other pigment effect can be obtained. If it exceeds 80 parts by weight, a film of satisfactory appearance will not be obtained.

The above-mentioned pigment and other additives may occur within the powder coating particle together with the film-forming resin, or may be present as different particles of the film-forming resin.

The powder coating of the present invention may contain any pigment that does not decrease its clarity, whether in quantity or in kind. If desired, the powder coating may not contain a pigment at all to be a clear coating capable of producing a transparent film.

The powder coating of the present invention typically comprises composite particles each consisting of a first particle containing part of a film-forming resin and a second particle disposed on the surface of said first particle, said second particle containing the remainder of said film-forming resin and having a glass transition temperature of 50-150°C . The powder coating composite particle mentioned above may be such that said second particle is merely attached to the surface of said first particle or such that said second particle is partially embedded in the surface layer of said first particle. The powder coating of the present invention may optionally comprise both of these two kinds of composite particles.

As the second particle is disposed on the surface of the first particle to provide a composite particle in this manner, the first particles of the composite particles are substantially prevented from contacting each other directly so that they do not cause blocking during storage easily and the free-flowing property of the powder coating during transport is improved. Moreover, by this integration of the second particle with the surface of the first particle to provide a composite particle, a film-forming resin with a low glass transition temperature (Tg), for example a resin with Tg = 40 °C , for the first particle is able to be used.

Of the above powder coating composite particle, the second particle melts together with the film-forming resin of the first particle in the stage of baking the powder coating to form a finished film, with the result that the film is free of defects such as surface irregularities due to the presence of the second particle.

The second particle mentioned above is preferably made of the same resin as the film-forming resin described above. For the production and other practical reasons, vinyl resin, acrylic resin, epoxy resin, polyester resin, melamine resin, etc. are generally selected. Among them, vinyl resin is preferred from the standpoint of ease of production and freedom in design.

The resin constituting the second particle has a Tg value of 50-150°C . If the Tg is less than 50°C , the effect of grafting the second particle onto the first particle may not be realized. If the Tg is over 150°C , the effect will not be further improved. The preferred Tg range is 70-120°C .

The volume average particle diameter for the second particle is preferably smaller than the volume average particle diameter of the powder coating. The volume average particle diameter for the second particle is preferably 0.001-10 μm and, for still better results, 0.01-5 μm.

The proportion of said second particle is preferably 0.05-35 parts by weight relative to 100 parts by weight of the powder coating. If it is less than 0.05 part by weight, the effect of the second particle may not be sufficiently realized. On the other hand, if it exceeds 35 parts by weight, the appearance of the film will be adversely affected.

The second particle can be directly produced by such production techniques as emulsion polymerization, suspension polymerization, etc. As an alternative, the second particle can be obtained by producing a resin by a production technique such as solution polymerization, block polymerization or the like, pulverizing the resin, and classifying the resulting powder.

The production technology that can be used for the production of the powder coating of the present invention is not particularly restricted, thus including the various processes conventionally used for the manufacture of powder coatings. A typical process may comprise mixing said film-forming resin, optional pigment, and other additives in a Henschel mixer, super mixer, ball-mill, Bumbery mixer or the like, feeding the resulting uniform mixture to an extruder, hot roll or other compounding machine where it is melt-compounded to provide a uniform dispersion of the additives in the molten film-forming resin and broken into chips. The chips are then crushed with an impact mill, such as a hammer mill, or a pneumatic mill such as a jet mill, and the resulting powder is classified to provide the powder coating of the present invention.

The above classification accomplishes the above-mentioned particle size distribution, with the proportion of particles larger than the above-defined particle diameter range and of particles smaller than the range being both diminished. The above classification can be carried out using a Tyler standard sieve of 170 mesh, preferably 200 mesh, a fluid classifier such as a dispersion separator or a micron separator, which separates and removes particles larger than 90 μm, preferably 80 μm, or a cyclone, dispersion separator, micron separator or other fluid classifier which separates and removes particles smaller than 1 μm.

The technology for producing the powder coating of the present invention is not limited to the methods described above. A typical alternative method comprises mixing the starting materials into a solvent and drying and pulverizing the resulting mixture and pulverizing it or spray-drying the mixture to provide a powder. Where necessary, the powder can be crushed and classified.

For the production of the powder coating of the present invention comprising said composite particles, the second particle component is mixed with the first particle component. In this mixing stage, the desired mode of integration or grafting of the first particle and second particle can be selectively obtained by judicious selection of a mixer and mixing conditions. For example, when a hybridizer is used as the mixer, the resulting powder coating is such that the second particle is partially embedded in the surface layer of the classified first particle. The above mixing can be accomplished with a generally used mixer such as a super mixer, Henschel mixer, hybridizer, ball-mill or the like. By the above integration and, where necessary, subsequent classification of the resulting composite particles, the powder coating comprising the composite particles according to the present invention can be obtained.

Referring to the starting materials for use in the production of the powder coating of the present invention, all components other than the resin are comprised of particles smaller than 700 μm in diameter in a proportion of 40-100 weight %, preferably 60-100 weight %. Starting with such powder coating materials, the chip is a uniform dispersion of the pigment and other additives in the film-forming resin so that the powder coating available on crushing the chip also has a substantially uniform composition from one particle to another. Therefore, in the film-forming process, the hardening of the resin proceeds uniformly to provide a film having very satisfactory surface smoothness and other appearance qualities.

The substrate for the powder coating of the present invention is not particularly restricted, thus including steel sheets, zinc phosphate-treated steel sheets, aluminum or aluminum alloy sheets, etc. for cars, household appliances, architectural members and general products.

The coating technology compatible with the powder coating of the present invention may comprise depositing the powder coating in a suitable thickness on a substrate surface in the manner of, for example, electrostatic spray coating, fluidized-dipping or the like and baking the powder coating so deposited. Where the resin component used is a thermosetting resin, a hardened film can thus be obtained.

EXAMPLES

The following examples further illustrate the present invention but by no means define its scope.

Example 1

Using a super mixer (manufactured by Nippon Spindle Mfg. Co.), 48 parts by weight of glycidyl group-containing solid acrylic resin (Tg = 50°C , number average molecular weight 3,000, epoxy equivalent 350), 12 parts by weight of 1,10-decanedicarboxylic acid, 2.2 parts by weight of bisphenol A epoxy resin (YD-012, Toto Kasei Corporation), 0.1 part by weight of polysiloxane surface modifier and 0.3 part by weight of benzoin were thoroughly mixed with stirring. The mixture was then melt-kneaded in a kneader (Buss), and chilled to solidify. The solidified mass was crushed to provide chips for powder coating.

The chips for powder coating thus obtained were pulverized with an impact mill (an atomizer manufactured by Fuji Powder Co., Ltd.) and the pulverizate was passed through a 0.7 mm-mesh screen and further through a 325-mesh Tyler standard sieve (pore size 44 $\mu$m) to remove particles larger than 44 $\mu$m. Then, by means of a pneumatic classifier (DS-2, Nippon Pneumatic Industries Co., Ltd.) all the particles smaller than 2 $\mu$m were removed to provide a powder coating.

Example 2

With the target classification size set as indicated in Table 1, a powder coating was prepared in the same manner as Example 1 except that a 250-mesh Tyler standard sieve (pore size 61 $\mu$m) was used in lieu of the 325-mesh Tyler standard sieve and that particles smaller than the diameter indicated in Table 1 were removed with a pneumatic classifier.

Example 3

With the target classification size set as indicated in Table 1, a powder coating was prepared in the same manner as Example 1 except that a 250-mesh Tyler standard sieve (pore size 44 $\mu$m) was used and that particles smaller than the diameter indicated in Table 1 were removed with a pneumatic classifier.

Example 4

With the target classification size set as indicated in Table 1, a powder coating was prepared in the same manner as Example 1 except that a 250-mesh Tyler standard sieve (pore size 61 $\mu$m) was used in lieu of the 325-mesh Tyler standard sieve and that the size selection with the pneumatic classifier was omitted.

Example 5

With the target classification size set as indicated in Table 1, a powder coating was prepared in the same manner as Example 1 except that a 170-mesh Tyler standard sieve (pore size 88 $\mu$m) was used in lieu of the 325-mesh Tyler standard sieve and that particles smaller than the diameter indicated in Table 1 were removed with the pneumatic classifier.

Example 6

The acrylic powder coating obtained in Example 4 was added to a finely divided acrylic resin powder with a particle diameter of 0.03-0.05 $\mu$m and Tg = 100°C [methyl methacrylate 87, styrene 10, methacrylic acid 3 (all parts by weight)] and the mixture was dry-mixed in a Henschel mixer for 30 seconds to provide a composite powder coating. The proportion of said finely divided powder was set at 1.0 weight % of the powder coating.

The volume average particle diameter, standard deviation of particle diameter distribution, and appearance changed little from those of the powder coating prior to addition of the finely divided acrylic resin. However, a marked improvement was realized in transportability. Moreover, when the resulting composite powder coating was stored at 30 °C for 6 months, and, then, visually inspected for blocking of powders, there was no blocking at all, indicating that the composite powder was excellent in blocking resistance. On the other hand, when the powder coating of Example 4 was similarly evaluated for blocking resistance, little conglomeration of the particles was observed.

Example 7

A commercial polyester powder coating (P-100, manufactured by Nippon Paint Co., Ltd.) was adjusted to the target classification value indicated in Table 1 and using a 200-mesh (pore size 74 µm) Tyler standard sieve, particles smaller than the cut-off particle diameter indicated in Table 1 were removed with a pneumatic classifier. Otherwise, the procedure of Example 1 was repeated to provide a powder coating.

This polyester powder coating contained 17 parts by weight of a blocked isocyanate as the curing agent with respect to 100 parts by weight of the film-forming thermosetting polyester resin and had a pigment content of 40 weight % based on the total weight of the powder coating.

Example 8

A commercial hybrid powder coating (H-100, manufactured by Nippon Paint Co., Ltd.) was set to the target classification value indicated in Table 1 and passed through a 200-mesh (pore size 74 µm) Tyler standard sieve, and particles smaller than the cut-off particle diameter indicated in Table 1 were removed with a pneumatic classifier.

Otherwise, the procedure of Example 1 was repeated to provide a powder coating.

This hybrid powder coating contained 50 parts by weight of polyester resin and 50 parts by weight of epoxy resin as film-forming resin components and had a pigment content of 40 weight % of the total weight of the powder coating.

Example 9

The powder coating starting material according to the same formulation as used in Example 1 was supplemented with 20 parts by weight of titanium dioxide (CR-50, Ishihara Sangyo Kaisha, Ltd.) and the resulting powder with particles less than 700 µm in diameter accounting for less than 40 weight % were stirred to mix using super mixer. The mixture was melt-kneaded in a cokneader and, after cooling, the resulting solid was crushed to prepare chips for a powder coating of Example 9. The chips were finely divided as in Example 1. With the target classification value set as indicated in Table 1, the powder was passed through a 250-mesh (pore size 61 µm) Tyler standard sieve, and particles smaller than the particle diameter shown in Table 1 were removed with a pneumatic classifier to provide a powder coating.

Example 10

The procedure of Example 9 was repeated except that the powder coating starting material with particles less less than 700 µm in diameter accounting for more than 40 weight % was used.

Comparative Example 1

A powder coating was prepared in the same manner as Example 1 except that particles larger and smaller than the range indicated in Table 1 were removed with the pneumatic classifier.

Comparative Example 2-3

With the target classification values set as indicated in Table 1, the starting material was passed through a 150-mesh Tyler standard sieve (pore size 104 µm) in lieu of the 325-mesh Tyler standard sieve and particles smaller than the cut-off particle diameter shown in Table 1 were removed with a pneumatic classifier. Otherwise, the procedure of Example 1 was repeated to provide powder coatings.

Comparative Example 4

With the target classification value set as indicated in Table 1, a powder coating was prepared in the same manner as Example 1 except that a 170-mesh Tyler standard sieve (pore size 88 µm) was used in lieu of the 325-mesh Tyler standard sieve and particles smaller than the cut-off particle diameter shown in Table 1 were removed with a pneumatic classifier.

Comparative Example 5

A commercial polyester powder coating (P-100, manufactured by Nippon Paint Co., Ltd.) was set to the target classification value indicated in Table 1 and a powder coating was prepared in the same manner as Example 1 except that a 150-mesh (pore size 104 μm) Tyler standard sieve was used and particles smaller than the cut-off particle diameter shown in Table 1 were removed with a pneumatic classifier.

This polyester powder coating contained 17 parts by weight of a blocked isocyanate as the curing agent with respect to 100 parts by weight of the film-forming thermosetting polyester resin and had a pigment content of 40 weight % based on the total weight of the powder coating.

Comparative Example 6

A commercial hybrid powder coating (H-100, manufactured by Nippon Paint Co., Ltd.) was set to the target classification value indicated in Table 1 and a powder coating was prepared in the same manner as Example 1 except that a 170-mesh (pore size 88 μm) Tyler standard sieve and particles smaller than the cut-off particle diameter shown in Table 1 were removed with a pneumatic classifier.

This hybrid powder coating contained 50 parts by weight of polyester resin and 50 parts by weight of epoxy resin as the film-forming resin component and had a pigment content of 40 weight % based on the total weight of the powder coating.

Comparative Example 7

The powder coating starting material according to the formulation of Example 1 was supplemented with 20 parts by weight of titanium dioxide (CR-50, Ishihara Sangyo Kaisha, Ltd.) and the resulting powder with particles smaller than 700 μm in diameter accounting for less than 40 weight % was mixed with stirring in a super mixer and, then, melt-kneaded using a cokneader. After cooling, the resulting solid was crushed to provide chips for powder coating.

The chips were finely divided in the same manner as Example 1 and set to the target classification value indicated in Table 1. Then, the powder was passed through a 150-mesh (pore size 104 μm) Tyler standard sieve and particles smaller than the cut-off particle diameter shown in Table 1 were removed with a pneumatic classifier to provide a powder coating.

Evaluation

Each of the powder coatings obtained was evaluated for the following parameters. The results are shown in Table 1.

1. Determination of the particle diameter and particle diameter distribution

The particle diameter was measured with a particle diameter measuring apparatus (Microtrac-II, Leeds & Northrop).

From the particle diameter frequency data thus obtained, the volume average particle diameter and standard deviation of particle diameter distribution were calculated by means of the following equation.

$$\sigma = [\Sigma \{ (D - X)^2 F \} / \Sigma F]^{1/2}$$

(wherein $\sigma$ stands for the standard deviation of particle diameter distribution, D for the particle diameter of an individual particle, X for the volume average particle diameter, $X = \Sigma (DF) / \Sigma F$ where F represents the frequency of the particle)

2. Evaluation of the quality of appearance

Each of the powder coatings prepared in Examples and Comparative Examples was evenly coated on an iron plate by electro coating method and baked at 140°C for 20 minutes to form a film. The appearance of the film was evaluated in NSIC values determined with an image sharpness tester (manufactured by Suga Testing Instruments Co.). The NSIC values were determined by Fourier spectrum analysis of the rectangular wave pattern image formed by reflection light from the film surface using the optical system illustrated in Fig. 1.

As shown in Fig. 1, the emission from a light source 1 was caused to pass through a condenser 2, a pattern 3 and a projector lens 4 and the light reflected by the coated surface of the object 5 was focused on the light-receiving plane of a photodiode array 6 to provide an image wave pattern. The light source 1 and the light-receiving plane of the photodiode array 6 were disposed at an angle of $\theta$ with respect to the coated surface of the object 5.

The NSIC value is the value obtained by standardizing the sum of square roots of the powers of the fundamental frequency $\nu_0$ and 3-fold equivalent frequency $3\nu_0$ of the image waveform from which the baseline intensity b had been subtracted for emphasizing the shape information

$$[P(\nu_0)^{1/2} + P(3\nu_0)^{1/2}]$$

with the corresponding value for the black glass plate

$$[P(\nu_0)^{1/2} + P(3\nu_0)^{1/2}]_{B.G}$$

as follows.

$$NSIC = [\,\{\,P(\nu_0)^{1/2} + P(3\nu_0)^{1/2}\,\} / P(\nu_0)^{1/2} + P(3\nu_0)^{1/2}\,\}_{B.G}\,] \times 100$$

This value represents the orange peel appearance (distortion from the square mesh), in the main, of the image.

3. Evaluation of transportability

In the coating system using a powder coating, the coating is generally transported from a powder feeder (fluidized bed) through an injector to a coating gun, passing through a hose.

The powder coating was continuously transported with the above coating system for one hour and the deposits of the powder coating in the injector and hose were visually inspected to evaluate the transportability of the powder coating. The following evaluation criterial were used.

◎ :No powder deposits
○ :Little powder deposits
✕ :Powder deposits nearly obstructing the injector or the hose

Table 1

| | Powder coating | Volume average particle diameter (μm) | | Standard deviation of particle diameter distribution (μm) | Particles removed by Tyler standard sieve (μm) | Particles removed by pneumatic classifier (μm) | Appearance (NSIC) (%) | Transport-ability |
|---|---|---|---|---|---|---|---|---|
| | | Target | Found | | | | | |
| Compar. Ex. 1 | | 10 | 9.5 | 7.2 | 44< | 30<,2> | 80.0 | × |
| Example 1 | | 20 | 20.1 | 14.3 | 44< | 2> | 69.0 | ○ |
| Example 2 | Acrylic | 20 | 24.1 | 19.8 | 61< | 1> | 60.0 | ○ |
| Example 3 | powder | 20 | 26.8 | 10.7 | 44< | 20> | 71.6 | ○ |
| Example 4 | coating | 30 | 30.5 | 17.5 | 61< | -- | 62.1 | ○ |
| Compar. Ex. 2 | | 30 | 26.5 | 25.3 | 104< | 1> | 51.4 | ○ |
| Compar. Ex. 3 | | 30 | 30.5 | 35.7 | 104< | 1> | 53.4 | ○ |
| Example 5 | | 40 | 40.4 | 16.7 | 88< | 25> | 60.0 | ○ |
| Compar. Ex. 4 | | 60 | 58.5 | 19.0 | 88< | 35> | 50.2 | ○ |
| Example 6 | | 30 | 30.5 | 17.5 | 61< | -- | 61.0 | ◎ |
| Example 7 | Polyester | 30~ | 32.1 | 18.0 | 74< | 8> | 40.0 | ○ |
| Compar. Ex. 5 | powder coating | 40 | 30.9 | 26.0 | 104< | 4> | 30.0 | ○ |
| | | | | | | | | ○ |
| Example 8 | Hybrid | 30~ | 30.0 | 16.8 | 74< | 7> | 35.0 | ○ |
| Compar. Ex. 6 | powder coating | 40 | 28.8 | 24.0 | 88< | 2> | 28.4 | ○ |
| Example 9 | Acrylic | 30 | 29.6 | 17.5 | 61< | -- | 50.0 | ○ |
| Example 10 | powder | 30 | 29.0 | 17.0 | 61< | -- | 55.0 | ○ |
| Compar. Ex. 7 | coating | 30 | 30.8 | 32.2 | 104< | 1> | 32.1 | ○ |

EP 0 687 714 B1

The data presented in Table 1 indicate the following.

The powder coating of Comparative Example 2 and that of Comparative Example 3 having the volume average particle diameters of 26.5 µm and 30.5 µm, respectively, both of which are corresponding to the conventional clear coating, with standard deviations of particle diameter distribution over 20 µm produced films of poor appearance. The powder coating of Comparative Example 4 had a volume average particle diameter of more than 50 µm and, although the standard deviation of particle diameter distribution was not greater than 20 µm, produced a film of poor appearance. The powder coating of Comparative Example 1 which had a volume average particle diameter of 9.5 µm with a standard deviation of 7.2 µm, corresponding to the parameters of the powder coating proposed in the patent literature mentioned hereinbefore, was poorly transportable because the average particle diameter was less than 20 µm.

The powder coating of Examples 1-6 which had volume average particle diameters within the range of 20-50 µm with standard deviations of particle diameter distribution not exceeding 20 µm were superior in transportability and produced good-looking films with the NSIC values not less than 60%. Particularly the powder coating of Example 1 which had a standard deviation not exceeding 16 µm produced a film of excellent appearance with the NSIC value of not less than 65%. The powder coating of Example 6 was comparable to the powder coating of Example 4 in the quality of appearance but was remarkably superior in transportability and in blocking resistance when stored.

The powder coating of Example 5 and Example 6 having the standard deviation of particle diameter distribution not less than 20, formed a film equivalent to that of the conventional pigment containing powder coating in the quality of appearance.

The powder coating of Example 7 produced a film of superior appearance compared with the powder coating of Comparative Example 5 because the standard deviation of particle diameter distribution of the powder coating of Example 7 was not greater than 20 µm.

The powder coating of Example 8 produced a film of superior appearance compared with the powder coating of Comparative Example 6 because the standard deviation of particle diameter distribution of the powder coating of Example 8 was not greater than 20 µm.

The powder coatings of Examples 7 and 8 were different from the powder coatings of Examples 1-6 in the type of film-forming resin but because the standard deviation of particle diameter distribution was not greater than 20 µm, they produced films of improved appearance without compromise in transportability.

The powder coating of Example 7 having the standard deviation of particle diameter distribution not less than 20, formed a film equivalent to that of the conventional pigment containing acrylic powder coating in the quality of appearance. The powder coatings of Examples 9 and 10 had volume average particle diameters within the range of 20-50 µm with standard deviations of particle diameter distribution not exceeding 20 µm and, as such, produced films of superior appearance as compared with the powder coating of Comparative Example 7.

The powder coating of Example 10 in which the coating particles less than 700 µm in diameter accounted for not less than 40 weight % produced a film of still improved appearance as compared with the powder coating of Example 9.

[Effect of the Invention]

Having the construction described above, the powder coating of the present invention is improved in transportability and capable of yielding a film of very satisfactory appearance.

**Claims**

1. A powder coating
   comprising

   a film-forming resin having a volume average particle diameter of 20 to 50 µm with a standard deviation of particle diameter distribution not greater than 20 µm; and
   wherein the particle diameter of the largest particles constituting said powder coating is not larger than 90 µm.

2. The powder coating according to claim 1
   wherein

   the standard deviation of particle diameter distribution is not greater than 16 µm.

3. The powder coating according to claim 1
   wherein

the standard deviation of particle diameter distribution is not greater than 13 µm.

4. The powder coating according to anyone of the claims 1 to 3, wherein

   the particle diameter of the smallest particles constituting said powder coating is not less than 1 µm.

5. The powder coating according to anyone of the claims 1 to 4, wherein

   said film-forming resin is at least one resin selected from vinyl resin, polyethylene resin and polyamide resin.

6. The powder coating according to anyone of the claims 1 to 4, wherein

   said film-forming resin is at least one resin selected from epoxy resin, thermosetting acrylic resin and thermosetting polyester resin.

7. The powder coating according to claim 6, wherein

   said powder coating contains additionally a curing agent and/or a curing accelerator.

8. The powder coating according to claim 7, wherein

   said powder coating contains said curing agent in an amount of 5 to 80 parts by weight based on 100 parts by weight of said film-forming resin; and
   wherein said powder coating further contains said curing accelerator in an amount of 0.1 to 5 parts by weight based on 100 parts by weight of said film-forming resin.

9. The powder coating according to anyone of the claims 1 to 8, wherein

   said powder coating contains at least one pigment selected from titanium dioxide, red iron oxide, yellow iron oxide, carbon black, phthalocyanine blue, phthalocyanine green and quinacridone red.

10. The powder coating according to claim 9, wherein

    said powder coating contains said pigment in an amount of 1 to 80 parts by weight based on 100 parts by weight of the powder coating.

11. The powder coating according to anyone of the claims 1 to 10, wherein

    said powder coating is consisting of powder coating particles; and each of said particles comprises a composite particle structure having a first particle and a second particle,
    wherein said first particle contains a part of said film-forming resin; and
    said second particle is disposed on the surface of said first particle, and said second particle contains the remainder of said film-forming resin and having a glass transition temperature of from 50 to 150° C.

12. The powder coating according to claim 11, wherein

    said second particle comprises a volume average particle diameter of from 0.001 to 10 µm.

13. The powder coating according to claim 11 or 12,

wherein

said powder coating contains said second particles in an amount of 0.05 to 35 parts by weight based on 100 parts by weight of said powder coating.

14. The powder coating according to anyone of the claims 11 to 13, wherein

said second particles are made of at least one resin selected from vinyl resin, acrylic resin, epoxy resin, polyester resin and melamine resin.

**Patentansprüche**

1. Pulverlack

mit einem filmbildenden Harz,
das einen mittleren, volumenbezogenen Teilchendurchmesser von 20 bis 50 µm aufweist,
wobei die Standardabweichung der Teilchendurchmesser-Verteilung nicht mehr als 20 µm beträgt; und
wobei der Teilchendurchmesser der größten, den Pulverlack bildenden Teilchen nicht mehr als 90 µm beträgt.

2. Pulverlack nach Anspruch 1,
dadurch gekennzeichnet, daß

die Standardabweichung der Teilchendurchmesser-Verteilung nicht mehr als 16 µm beträgt.

3. Pulverlack nach Anspruch 1,
dadurch gekennzeichnet, daß

die Standardabweichung der Teilchendurchmesser-Verteilung nicht mehr als 13 µm beträgt.

4. Pulverlack nach einem der Ansprüche 1 bis 3,
dadurch gekennzeichnet, daß

der Teilchendurchmesser der kleinsten, den Pulverlack bildenden Teilchen nicht weniger als 1 µm beträgt.

5. Pulverlack nach einem der Ansprüche 1 bis 4,
dadurch gekennzeichnet, daß

das filmbildende Harz wenigstens ein Harz ist, ausgewählt aus Vinylharz, Polyethylenharz und Polyamidharz.

6. Pulverlack nach einem der Ansprüche 1 bis 4,
dadurch gekennzeichnet, daß

das filmbildende Harz wenigstens ein Harz ist, ausgewählt aus Epoxyharz, wärmeaushärtendes Acrylharz und wärmeaushärtendes Polyesterharz.

7. Pulverlack nach Anspruch 6,
dadurch gekennzeichnet, daß

der Pulverlack zusätzlich ein Vernetzungsmittel und/oder einen Vernetzungsbeschleuniger enthält.

8. Pulverlack nach Anspruch 7,
dadurch gekennzeichnet, daß

der Pulverlack

- je bezogen auf 100 Gew.-Teile filmbildendes Harz -

5 bis 80 Gew.-Teile Vernetzungsmittel; und
0,1 bis 5 Gew.-Teile Vernetzungsbeschleuniger enthält.

**9.** Pulverlack nach einem der Ansprüche 1 bis 8,
<u>dadurch gekennzeichnet,</u> daß

der Pulverlack wenigstens ein Pigment enthält, ausgewählt aus Titandioxid, rotes Eisenoxid, gelbes Eisenoxid, Ruß, Phthalocyaninblau, Phthalocyaningrün und Chinacridonrot.

**10.** Pulverlack nach Anspruch 9,
<u>dadurch gekennzeichnet,</u> daß

der Pulverlack dieses Pigment in einem Anteil von 1 bis 80 Gew.-Teilen enthält, bezogen auf 100 Gew.-Teile Pulverlack.

**11.** Pulverlack nach einem der Ansprüche 1 bis 10,
<u>dadurch gekennzeichnet,</u> daß

der Pulverlack aus Pulverlackteilchen besteht;
jedes Pulverlackteilchen eine Verbundstruktur besitzt, die ein erstes Teilchen und ein zweites Teilchen aufweist;
wobei das erste Teilchen einen Teil des filmbildenden Harzes enthält;
das zweite Teilchen an der Oberfläche des ersten Teilchens angeordnet ist; und
dieses zweite Teilchen den restlichen Anteil an filmbildendem Harz enthält und eine Glasübergangstemperatur im Bereich von 50 bis 150°C aufweist.

**12.** Pulverlack nach Anspruch 11,
<u>dadurch gekennzeichnet,</u> daß

dieses zweite Teilchen einen mittleren volumenbezogenen Teilchendurchmesser von 0,001 bis 10 µm aufweist.

**13.** Pulverlack nach Anspruch 11 oder 12,
<u>dadurch gekennzeichnet,</u> daß

der Pulverlack diese zweiten Teilchen in einem Anteil von 0,05 bis 35 Gew.-Teilen enthält, bezogen auf 100 Gew.-Teile Pulverlack.

**14.** Pulverlack nach einem der Ansprüche 11 bis 13,
<u>dadurch gekennzeichnet,</u> daß

diese zweiten Teilchen aus wenigstens einem Harz bestehen, ausgewählt aus Vinylharz, Acrylharz, Epoxyharz, Polyesterharz und Melaminharz.

**Revendications**

**1.** Laque en poudre
comprenant

une résine filmogène avec un diamètre de particule moyen par rapport au volume entre 20 et 50 µm, l'écart type de la répartition du diamètre de particule n'étant pas supérieur à 20 µm ; et
dans laquelle le diamètre de particule des plus grandes particules formant la laque en poudre n'est pas supérieur à 90 µm.

**2.** Laque en poudre conformément à la revendication 1,
<u>caractérisée en ce que,</u>

l'écart type de la répartition du diamètre de particule n'est pas supérieur à 16 µm.

3. Laque en poudre conformément à la revendication 1,
   caractérisée en ce que,

   l'écart type de la répartition du diamètre de particule n'est pas supérieur à 13 µm.

4. Laque en poudre conformément à une des revendications 1 à 3,
   caractérisée en ce que,

   le diamètre de particule des plus petites particules formant la laque en poudre n'est pas inférieur à 1 µm.

5. Laque en poudre conformément à une des revendications 1 à 4,
   caractérisée en ce que,

   cette résine filmogène est au moins une résine sélectionnée parmi la résine vinylique, la résine polyéthylène et la résine polyamide.

6. Laque en poudre conformément à une des revendications 1 à 4,
   caractérisée en ce que,

   cette résine filmogène est au moins une résine sélectionnée parmi la résine époxy, la résine acrylique thermodurcissable et la résine polyester thermodurcissable.

7. Laque en poudre conformément à la revendication 6,
   caractérisée en ce que,

   la laque en poudre comprend en plus un agent de réticulation et/ou un accélérateur de réticulation.

8. Laque en poudre conformément à la revendication 7,
   caractérisée en ce que,

   cette laque en poudre comprend

   - par rapport à 100 parties en poids de résine filmogène -

   5 à 80 parties en poids de cet agent de réticulation ; et
   0,1 à 5 parties en poids de cet accélérateur de réticulation.

9. Laque en poudre conformément à une des revendications 1 à 8,
   caractérisée en ce que,

   cette laque en poudre comprend au moins un pigment,
   sélectionné parmi le dioxyde de titane, l'oxyde rouge de fer, l'oxyde jaune de fer, le noir de carbone, le bleu phtalocyanine, le vert phtalocyanine et le rouge quinacridone.

10. Laque en poudre conformément à la revendication 9,
    caractérisée en ce que,

    cette laque en poudre comprend ce pigment dans une quantité de 1 à 80 parties en poids par rapport à 100 parties en poids de la laque en poudre.

11. Laque en poudre conformément à une des revendications 1 à 10,
    caractérisée en ce que,

    cette laque en poudre se compose de particules de laque en poudre ;
    toute particule de laque en poudre comprenant une structure de particule composée ayant une première particule et une deuxième particule ;

la première particule comprenant une partie de la résine filmogène ; et

la deuxième particule étant agencée à la surface de la première particule ; et

cette deuxième particule comprenant la partie restante de la résine filmogène et ayant une température de transition vitreuse dans la plage de 50 à 150°C.

12. Laque en poudre conformément à la revendication 11,
caractérisée en ce que,

cette deuxième particule a un diamètre de particule moyen par rapport au volume entre 0,001 et 10 µm.

13. Laque en poudre conformément à la revendication 11 ou 12,
caractérisée en ce que,

cette laque en poudre comprend cette deuxième particule dans une quantité de 0,05 à 35 parties en poids par rapport à 100 parties en poids de la laque en poudre

14. Laque en poudre conformément à une des revendications 11 à 13,
caractérisée en ce que,

cette deuxième particule se compose d'au moins une résine sélectionnée parmi la résine vinylique, la résine acrylique, la résine époxy, la résine polyester et la résine de mélamine.

Fig.1